# EUROPEAN PATENT SPECIFICATION

(11) **EP 2 884 418 B1**
(45) Date of publication and mention of the grant of the patent: **22.03.2017**
(21) Application number: 14003010.7
(22) Date of filing: 01.09.2014
(51) Int. Cl.: G06F 21/55, G06Q 40/00, H04L 29/06, G06Q 30/00

(54) **Fraud detection using network analysis**
Erkennung von Betrug durch Netzwerkanaylse
Détection de la fraude en utilisant l'analyse de réseau

(30) Priority: 10.12.2013 US 201314102481
(43) Date of publication of application: 17.06.2015
(73) Proprietor: SAP SE, 69190 Walldorf (DE)
(72) Inventor: Hoffmann, Florian, 69190 Walldorf (DE); Krasle, Darin, 69190 Walldorf (DE)
(74) Representative: Müller-Boré & Partner Patentanwälte PartG mbB

(56) References cited:
- EP-A1- 2 654 003
- US-A1- 2002 156 724
- US-A1- 2005 182 708
- US-B1- 7 562 814
- Chau Polo: "Catching bad guys with graph mining", XRDS: Crossroads, The ACM Magazine for Students, vol. 17, no. 3 1 March 2011 (2011-03-01), pages 16-18, XP002732414, DOI: 10.1145/1925041.1925044 Retrieved from the Internet: URL:www.cs.cmu.edu/~dchau/papers/polo_catc h_bad_guys.pdf [retrieved on 2014-11-12]
- Philip Rathle: "How Graph Databases Uncover Patterns To Break Up Organized Crime", , 1 July 2014 (2014-07-01), XP002732415, Retrieved from the Internet: URL:http://web.archive.org/web/20140701003 805/http://thenewstack.io/how-graph-databa ses-uncover-patterns-to-break-up-organized -crime/ [retrieved on 2014-11-11]

## Description

### BACKGROUND

An important area of data mining is anomaly detection, particularly fraud detection. Incidences of fraud are becoming a serious problem affecting different businesses such as financial institutions, insurance companies, public safety services, credit companies, etc. If such incidents are not curbed on time, they may cause severe monetary losses to the impacted organizations in addition to maligning the reputation of the organizations. In general, a process of fraud detection involves data collection, data preparation or filtration, and data analysis. Conventional techniques used for data analysis include predictive analysis, network graph analysis, etc. In the network graph analysis technique, entities involved in a potential fraud case and their relationships are represented as a network graph and analyzed for fraud. However, performing network graph analysis may become an arduous task when the number of entities involved in a potential fraud case is big, or when the entities share a complex relationship with each other.
US 2002/156724 A1 discloses a system and a method for depicting on-line transactions as a connected graph, wherein nodes may represent entities and edges represent transactions conducted between entities. The source and/or the destination of a value transferred from/to the initial entity is traced to identify a set of related or connected transactions.

### BRIEF DESCRIPTION OF THE DRAWINGS

The invention relates to a computer-implemented method having the features of claim 1. Preferred embodiments are subject-matters of the dependent claims. The claims set forth the embodiments with particularity. The embodiments are illustrated by way of examples and not by way of limitation in the figures of the accompanying drawings in which like references indicate similar elements. The embodiments, together with its advantages, may be best understood from the following detailed description taken in conjunction with the accompanying drawings.
**FIG. 1** is a block diagram illustrating an overview of an exemplary fraud management system for analyzing potential fraud using a network graph, according to an embodiment.
**FIG. 2** illustrates a business object including a network analysis feature for analyzing potential fraud associated with an entity in a network graph, according to an embodiment.
**FIG. 3** illustrates an exemplary node type attributes including information on types of nodes to be generated in a network graph, according to an embodiment.
**FIG. 4** illustrates an exemplary view referred from node type attributes for generating nodes of type 'business partner,' according to an embodiment.
**FIG. 5** illustrates an exemplary view referred from node type attributes for generating nodes of type 'claim,' according to an embodiment.
**FIG. 6** illustrates an exemplary edge type attributes including information on types of edges to be generated in a network graph, according to an embodiment.
**FIG. 7** illustrates an exemplary view referred from edge type attributes for generating edges of type 'claimant,' according to an embodiment.
**FIG. 8** illustrates an exemplary view referred from edge type attributes for generating edges of type 'policy holder,' according to an embodiment.
**FIG. 9** illustrates an exemplary network graph generated based upon node type attributes and edge type attributes, according to an embodiment.
**FIGs. 10A-10G** illustrate a breadth-first search traversal to determine back nodes in a network graph for cycle detection, according to an embodiment.
**FIGs. 11A-11D** illustrate a depth-first traversal to mark detected cycle edges in a network graph, according to an embodiment.
**FIG.12** is a flow chart of a process for performing fraud analysis using a network graph, according to an embodiment.
**FIG.13** is a block diagram of an exemplary computer system, according to an embodiment.

### DESCRIPTION

Embodiments of techniques for fraud detection using network analysis are described herein. In the following description, numerous specific details are set forth to provide a thorough understanding of the embodiments. One skilled in the relevant art will recognize, however, that the embodiments can be practiced without one or more of the specific details, or with other methods, components, materials, etc. In other instances, well-known structures, materials, or operations are not shown or described in detail.

Reference throughout this specification to "one embodiment", "this embodiment" and similar phrases, means that a particular feature, structure, or characteristic described in connection with the embodiment is included in at least one of the one or more embodiments. Thus, the appearances of these phrases in various places throughout this specification are not necessarily all referring to the same embodiment. Furthermore, the particular features, structures, or characteristics may be combined in any suitable manner in one or more embodiments.

An "entity" represents an object, a person, or a concept. In an embodiment, the entity may be any one of, but not limited to, a business document such as an insurance claim, a business partner such as a person or an organization, a physical object such as a car, a location such as an address, a point in time such as date and time, a fraud indicator such as a rule (e.g., policy holder age < 24 years), and a similarity measure such as similar names and addresses, etc. In an embodiment, an entity under investigation is called a 'central entity.' A relationship represents an association between the entities. Some examples of the relationship may be, but not limited to, a role, e.g., 'claimant of,' a connection, e.g., 'is brother of,' an ownership, e.g., 'holder of car,' a time frame, e.g., 'occurred on,' similarity, e.g., '56% address similarity,' confidence, e.g., '89% fraud probability,' etc.

An entity involved in a business transaction may be analyzed for potential fraud. Various fraud management applications such as SAP^{®} Fraud Management enable organizations to investigate or detect fraud in their business transactions. Steps involved in fraud detection are data collection, data preparation or filtration, and data analysis. Fraud detection method includes, but is not limited to, predictive analysis, network graph analysis, etc. In network graph analysis, the entities involved in a potential fraud case and their relationships are represented as a network graph. Using the network graph, a potential fraud can be easily analyzed graphically. For example, if the network graph shows that two business partners are involved in more than one insurance claim together, it may indicate a potential fraud. SAP^{®} Fraud Management includes a 'network analysis' feature to detect fraud by analyzing entities involved in a potential fraud case and their relationships using a network graph.

In a network graph, entities may be represented as nodes and relationships between entities may be represented as edges. In an aspect, the edges may be labeled to show a type of relationship between the entities. In another aspect, the network graph may be a directed graph where relationships distinguish between source and target nodes, e.g., 'a leads to b' relationship. Alternatively, the network graph may be an undirected graph where there is no distinction between source and target nodes. In yet another aspect, the network graph may be a multi-graph in which two nodes are connected by multiple edges, e.g., in the same direction. For example, an entity can be a "claimant of' as well as "policy holder of" a same insurance claim. The multi-graph represents a double or multiple involvement of a same entity in a business transaction. In an embodiment, the network graph may represent a tree structure.

A cycle within a network graph indicates a probability of fraud. The cycle may be defined as a sequence of edges that when followed lead back to a same node from where it began. The cycle indicates that the entities constituting the cycle are in more than one business relationship thereby indicating the probability of occurrence of fraud. Therefore, the presence of cycles in the network graph indicates that the entities involved in the cycle are required to be investigated further for potential fraud. In an embodiment, the entities may be further investigated, e.g., by inquiring, performing background check, etc., to determine if the investigated entity is involved in a fraudulent transaction.

Typically, it is inconvenient and difficult to analyze network graphs including vast number of nodes and cycles. It is therefore prudent to automatically detect and highlight the cycles within a network graph so that a user can easily analyze the highlighted cycles to investigate fraud.

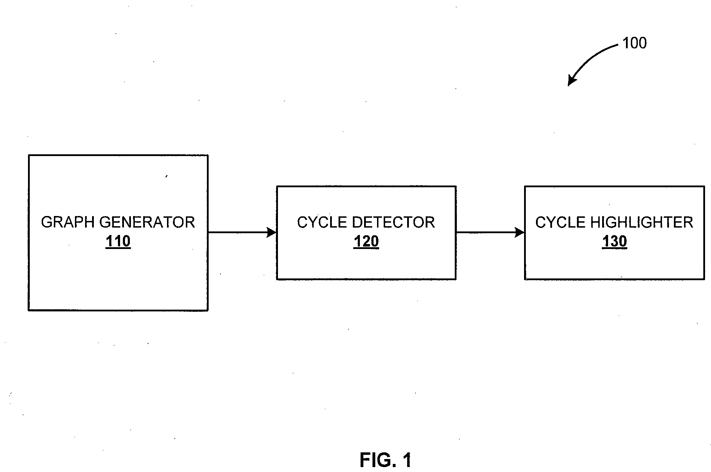

FIG. 1 is a block diagram illustrating a fraud management system 100 for investigating potential fraud related to an entity (not shown). The entity may be selected from a list of entities (not shown) suspected of potential fraud. The fraud management system 100 includes graph generator 110 communicatively coupled to cycle detector 120 which in turn is coupled to cycle highlighter 130. The graph generator 110 generates a network graph (not shown) to graphically represent the selected entity (i.e., the entity under investigation) as a primary node (e.g., an origin node) and one or more other entities associated with the selected entity as secondary nodes (e.g., non-origin nodes). The relationships between the entities or nodes are represented as edges in the network graph. Once the network graph is generated, the cycle detector 120 detects whether the generated network graph includes one or more cycles. A cycle may be defined as a path, formed by a sequence of edges, originating from the primary node and terminating at the primary node without traversing the secondary nodes (non-origin nodes) in the path more than once. The cycle indicates that the entities constituting the cycle are in more than one business relationship which indicates a probability of fraud. The cycle detector 120 marks the detected cycles. The marked cycles are highlighted by the cycle highlighter 130. The highlighted cycle indicates that the entities constituting the cycle are required to be further investigated for potential fraud.

In an embodiment, the fraud management system 100 includes detection engine (not shown) to determine one or more entities suspected of potential fraud and one of these suspected entities can be selected for investigation. In an embodiment, the detection engine identifies the entities suspected of fraud based upon one or more predefined rules. For example, if an insurance scheme requires that "*age of insured person should be > 24 years*" and the age of a claimant involved in the insurance claim is less than 24 years, then the detection engine identifies the claimant as a suspected entity. In an embodiment, the detection engine maps the attributes of an entity to one or more predefined rules of a list of predefined rules to detect whether the entity is complying with the predefined rules. When the entity does not comply with the rules, it is determined as "suspected entity." In an embodiment, the detection engine checks all the entities on the fraud management system 100 and generates a list of suspected entities (not shown). In an embodiment, the entities on the fraud management system 100 are entities associated with another system such as an enterprise resource planning (ERP) system, customer relationship management (CRM) system, etc. In an embodiment, the list of suspected entities is rendered for selection by a user and one of the suspected entities can be selected for investigation. In an embodiment, an alert such as a business object (BO) is generated for each of the suspected entities and displayed against the respective suspected entities in the list. In an embodiment, a suspected entity in the list may be selected for further investigation using the alert BO.

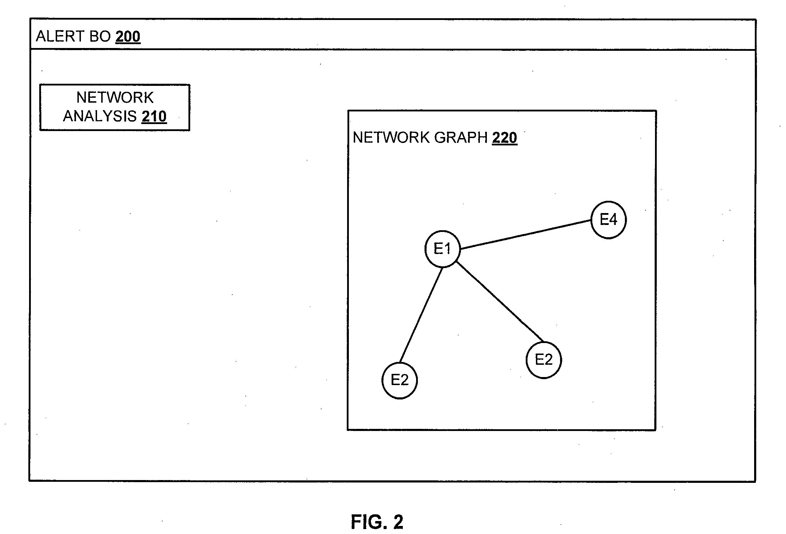

FIG. 2 shows exemplary 'alert' BO 200 generated for a suspected entity. The alert BO 200 includes feature 'network analysis' 210 which can be selected to graphically investigate the suspected entity for potential fraud. In an embodiment, the alert BO 200 includes the feature 'network analysis' 210 as an icon. In another embodiment, the alert BO 200 includes various screens (not shown) and one of the screens includes the feature 'network analysis' 210. When the 'network analysis' 210 is selected, the graph generator 110 (FIG. 1) may dynamically generate network graph 220 for the entity under investigation (e.g., E1). As shown, the network graph 220 is constructed with the entity under investigation (i.e., E1) as an origin or a root node and other related entities (e.g., E2, E3, and E4) branching out from the entity under investigation (i.e., E1). In an embodiment, the graph generator 110 identifies the entities (e.g., E2, E3, and E4) related to the entity under investigation (E1) and analyzes their relationships to generate the network graph 220.

In an embodiment, for generating the network graph 220, the graph generator 110 reads data related to nodes (representing entities) and edges (representing relationship between entities) from the fraud management system 100. In an embodiment, the data related to nodes are stored as node type attributes and the data related to edges are stored as edge type attributes. The node type attributes and the edge type attributes are read to generate nodes and edges in the network graph. The node type attributes include customized information such as types of nodes to be generated, a node type ID indicating identifier (ID) for each type of nodes, a label for each type of nodes, etc. Similarly, the edge type attributes includes customized information such as types of relationships or edges to be generated, edge type ID indicating identifier (ID) for different types of edges, a label for different types of edges, etc.

The node type attributes also include information about a view associated with respective node type. A view defines various nodes to be generated under respective node type. For example, a view "business_partner" defines various nodes (entities) of the type 'business partner' that could be generated. The views may be created and associated with respective node type by a user. Similarly, the edge type attributes also include information about views associated with respective edge types. A view defines various edges to be generated under respective edge type. For example, a view "claimant" defines various edges (relationships) of the type 'claimant' that could be generated.

In an embodiment, the views are created upon underlying database tables in in-memory database of a fraud management system. For example, the view "business_partner" may be created upon a database table "BUSINESS_PARTNER" which includes information about business partners, e.g., business partners IDs, first names of the business partners, last names of the business partners, etc. In an embodiment, a "create new view" option may be selected from a menu of the fraud management system and a structured query language (SQL) statement could be entered in a pop-up generated in response to selection of the option to create a view. For example, the "business_partner" view may be created by entering the SQL statement:
SELECT business_partner ID AS ID1, first_name ∥'' ∥last_ name AS label
   FROM BUSINESS_PARTNER
The SQL statement is executed in a processor of the fraud management system to create the view "business_partner." The created view "business_partner" includes one column (ID1) with rows containing IDs of respective business partners to be displayed as respective nodes and a second column (label) with rows containing full names of the respective business partners to label their respective nodes. The created view "business_partner" may be considered as a table including a first column (ID1) containing respective business partner IDs and a second column (label) containing names of the respective business partners. The "business_partner" view defines various 'business partner' nodes to be generated. In an embodiment, each node is labeled with
respective name of the business partners.

Similarly, upon a database table "INSURANCE_CLAIM" including information about insurance claims, e.g., claim_number, etc., a "claim" view may be created. The "claim" view may be created by entering the SQL statement:
SELECT claim_number AS ID1, claim_number AS label
   FROM INSURANCE_CLAIM
The created view "claim" includes a first column (ID1) containing claim numbers of respective insurance claims to be displayed as respective nodes and a second column (label) containing again claim numbers of respective insurance claims to label their respective nodes. The view "claim" defines various claim nodes to be generated. Therefore, a row of the view could be interpreted as a respective node in a network graph.

In the same manner, views may be created for various edge types. For example, the "claimant" view is created for the edge type 'claimant of' upon database table "INSURANCE_CLAIM". The database table INSURANCE_CLAIM includes information related to various insurance claims and business partners insured under corresponding insurance claims. The "claimant" view may be created by entering the SQL statement:
SELECT business partner ID AS source_node_ID1, claim AS target_node_ID1 1
   FROM INSURANCE_CLAIM
The "claimant" view is a table which includes two columns, first column (source_node_ID1) indicating a source node (business partner ID) and second column (target_node_ID1) indicating a target node (claim) corresponding to the source node (business partner ID) per row. In an embodiment, the "claimant" view may also include a column (label) to label the edge as 'is claimant of.' The rows of the "claimant" view may be read to generate edges between the corresponding source nodes and target nodes.

In an embodiment, a view may be of a particular type, for example, an attribute view, an analytical view, a calculation view, etc. Attribute view is a type of view that includes non-quantifiable data fields. In an embodiment, an attribute view models an entity comprising non-quantifiable data fields from one or more database tables. Analytical view is a type of view that includes one or more quantifiable data fields (measures) from a single database table. Therefore, the analytical view models quantifiable data fields of the single database table. The analytical view may also include at least one of one or more non-quantifiable data fields and/or one or more attribute views. Calculation view is a type of the view that includes a plurality of quantifiable data fields (measures) from multiple database tables. Typically, the calculation view models more advanced combination of data stored in a database. In an embodiment, the calculation view may also include at least one of one or more non-quantifiable data fields, one or more attribute views, and one or more analytical views. In an embodiment, a fraud management system includes a menu with items such as "create new calculation view (CA)," "create new analytical view (AN)," and "create new attribute view (AT)" to enable users create one or more of these views.

In one embodiment, the views are created upon database tables of the fraud management system. The database tables of the fraud management system may be replicated from a database of one or more relevant business applications (e.g., insurance management). In an embodiment, a command may be provided through SAP^{®} system landscape transformation (SLT) tool to replicate a database table (data) from relevant business application into the fraud management system. The replication may be 1:1 where the replicated database table would be the same as a source database table. Whenever the database table of the business application (source database table) gets updated, the SLT tool automatically updates the corresponding replicated database table in the fraud management system so that both the database tables are synchronized. In an embodiment, the fraud management system's database is an in-memory database. Upon the replicated database table of the fraud management system, various views may be created.

In an embodiment, the created views are associated with respective 'node type' or 'edge type.' In an embodiment, at least one view is required for generating nodes of various types and at least one view is required for generating edges of various types. In an embodiment, for different types of nodes (entities), different views are created. For example, for two types of nodes (entities), e.g., 'insurance claim' and 'business partner,' two views are created. Each view defines various nodes to be generated under respective node types. Similarly, for different types of edges (relationships), different views are created. For example, for two types of edges (relationships), e.g., 'claimant' and 'policy holder,' two views are created. A view defines various edges to be generated under respective edge type.

In an embodiment, the graph generator 110 (FIG. 1) may read the views to dynamically generate different types of nodes and edges. In an embodiment, the views related to nodes are included in the node type attributes and the views related to the edges are included in the edge type attributes. Therefore, the node type attributes also include information such as a view for each type of nodes (e.g., 'business_partner' view for business partner nodes and 'insurance_claim' view for claim nodes), and a database (DB) package indicating a location where the respective view is stored, e.g., a folder within which the respective view is stored. Similarly, the edge type attributes also include information such as a view for each type of edges, and a DB package indicating a folder within which the respective view is stored. The graph generator 110 reads the node type attributes and the edge type attributes to generate different types of nodes and edges in the network graph.

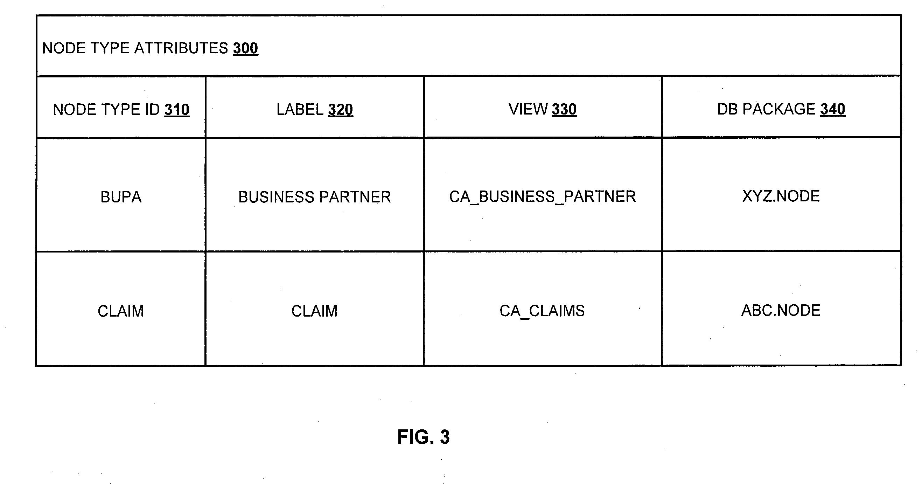

FIG. 3 shows exemplary node type attributes 300 that could be read, e.g., by the graph generator 110 (FIG. 1), to generate nodes of various types in a network graph. The node type attributes 300 provide information on various types of nodes to be generated (e.g., 'claim' nodes, 'business partner' nodes, etc.). The node type attributes 300 include information such as node type ID 310 to identify different types of nodes (e.g., ID 'BUPA' for 'business partner' nodes and ID 'CLAIM' for 'claim' nodes), label 320 for the different types of nodes (e.g., label 'claim' for 'claim' nodes and label 'business partner' for 'business partner' nodes), view 330 to indicate different views associated with the different types of nodes (e.g., view 'CA_BUSINESS_PARTNER' for 'business partner' nodes and view 'CA_CLAIMS' for 'claim' nodes), and database (DB) package 340 indicating a folder where the respective views are stored. The graph generator 110 may refer view 'CA_BUSINESS_PARTNERS' within folder 'xyx.node' to generate one or more nodes of type 'business partner,' and may refer view 'CA_CLAIM' within folder 'abc.node' to generate one or more nodes of type 'claim.'

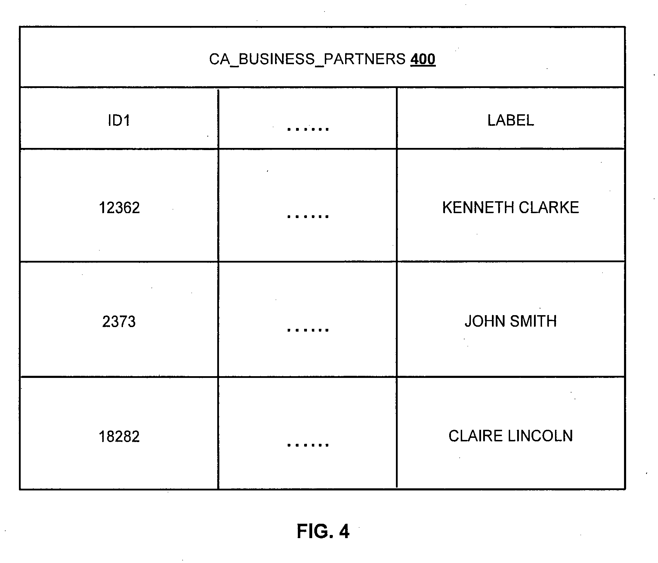

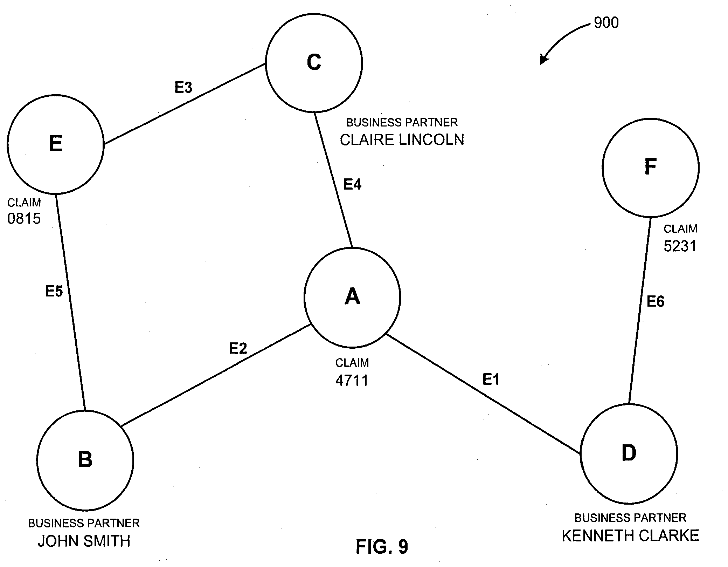

FIG. 4 shows exemplary view 'CA_BUSINESS_PARTNERS' 400 to define various nodes under the node type 'business partner'. The view 'CA_BUSINESS_PARTNERS' 400 includes column 'ID1' containing IDs of respective business partners to be displayed as nodes, and column 'label' containing full name of the respective business partners to label their corresponding nodes. As shown, three business partner nodes with IDs 12362, 2373, and 18282 could be generated with respective labels as 'Kenneth Clarke,' 'John Smith,' and 'Claire Lincoln.' These nodes are represented in FIG. 9 as node D, B, and C of network graph 900. In an embodiment, as shown in FIG. 9, these nodes are labeled with respective name of the business partners. Based upon the node type attribute 300 (FIG. 3) and the view 'CA_BUSINESS_PARTNER' 400 (FIG. 4), the 'business partner' types nodes D, B, and C (FIG. 9) are generated.

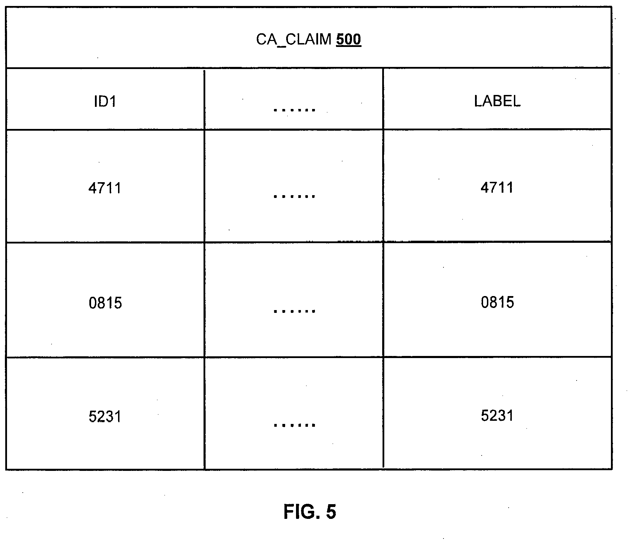

Similarly, the graph generator 110 (FIG. 1) may refer the view 'CA_CLAIMS' 500 (FIG. 5) within the folder 'abc.node' to generate one or more nodes of the type 'claim.' As shown in FIG. 5, the view 'CA_VIEW' 500 includes column 'ID1' containing insurance numbers of respective insurance claims to be presented as nodes, and a column 'label' with rows containing insurance numbers of the respective insurance claims to label the corresponding nodes. The rows of the view are transformed into nodes. As shown, three 'claim' nodes '4711,' '0815,' and '5231' could be generated. These nodes are represented as node A, E, and F, respectively, in FIG. 9. In an embodiment, as shown in FIG. 9, these nodes are labeled with respective insurance number of the insurance claims. Thus, based upon the node type attribute 300 (FIG. 3) and the view 'CA_CLAIM' 500 (FIG. 5), the 'claim' types nodes A, E, and F are generated.

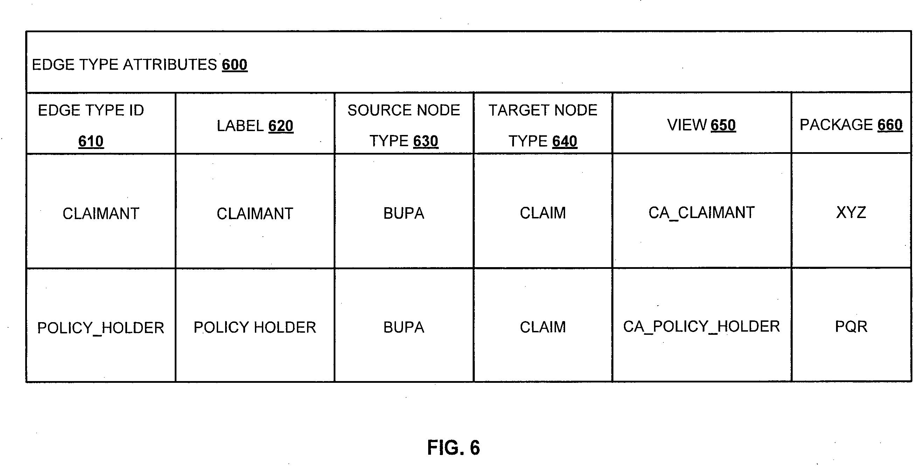

Edge type attributes 600 illustrated in FIG. 6, according to one embodiment, provide information on types of edges to be generated (e.g., claimant and policy holder). The edge type attributes 600 include information such as edge type ID 610 to identify different types of edges (e.g., ID 'CLAIMANT' for claimant edges and ID 'POLICY_HOLDER' for policy holder edges), label 620 for the different types of edges (e.g., label 'claimant' for claimant edges and label 'policy holder' for policy holder edges), source node type 630 to indicate a type of source or start node for respective edges, target node type 640 to indicate a type of target or end node for the respective edges, view 650 to indicate the views associated with the different types of edges (e.g., view 'CA_CLAIMANT' for claimant edges and view 'CA_POLICY_HOLDER' for policy holder edges), and package 660 indicating a folder within which the respective views are stored.

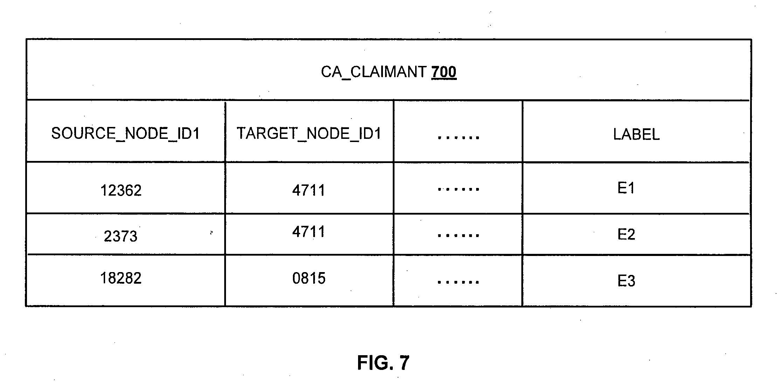

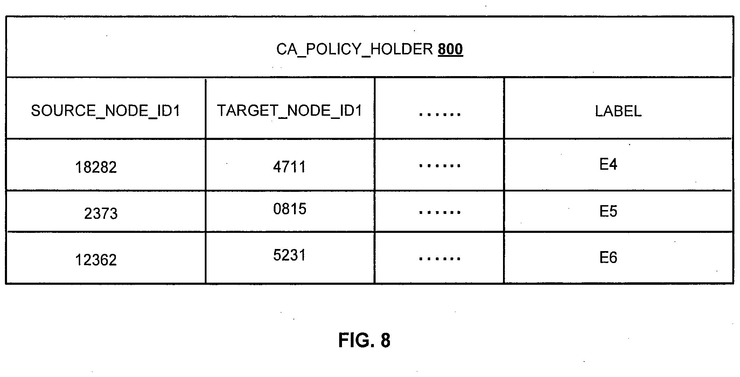

The graph generator 110 (FIG. 1) may refer the view 'CA_CLAIMANT' 700 illustrated in FIG. 7 to generate one or more edges of type 'claimant.' As illustrated, the view 'CA_CLAIMANT' 700 shows that claimant edge E1 is connecting node 'Kenneth Clarke (ID: 12362)' (source node) and claim node '4711' (target node), claimant edge E2 is between node 'John Smith (ID: 2373)' (source node) and claim node '4711' (target node), and claimant edge E3 is between node 'Claire Lincoln (ID: 18282)' (source node) and claim node '0815' (target node). This correspondence between the edges and nodes of view 'CA_CLAIMANT' 700 is also shown in FIG. 9. In an embodiment, these claimant edges may be labeled as 'claimant.' Similarly, the graph generator 110 refers to view 'CA_POLICY_HOLDER' 800 (FIG. 8) to generate edges E4, E5, and E6 of the type 'policy holder,' as shown in FIG. 9.

Once network graph 900 is generated as illustrated in FIG 9, according to one embodiment, the cycle detector 120 (FIG. 1) may detect whether the network graph 900 includes a cycle. With reference to various embodiments, the cycle may be defines as a path, formed by a sequence of edges, starting from an origin node and terminating at the origin node without traversing the non-origin nodes in the path more than once. The cycle indicates that the entities constituting the cycle, maybe in more than one business relationship thereby indicating the probability of occurrence of fraud. Therefore, the presence of cycles indicates a potential fraud.

In an embodiment, for detecting cycles, the cycle detector 120 first determines one or more back nodes in the network graph 900. A back node is a node in a cycle with maximum edge distance from the origin node. The one or more back nodes may be determined by using depth first search algorithm. The one or more back nodes may be also determined by using breadth first search algorithm. For example, using breadth first search algorithm, a back node detecting process (not shown) performs breadth first search traversal of the network graph 900 starting from the origin node (e.g., claim node '4711' or node A). The origin node represents the entity selected by a user. For each node, all neighboring nodes with equal or higher depth are visited. A depth is a minimum number of edges to be traversed for reaching the origin node. For example, the depth of claim node F is '2' as minimum two edges should be traversed to reach the claim node 4711 (origin node), and the depth of 'business partner' node B is '1' as minimum one edge is to be traversed to reach the claim node 4711 (origin node). The depth of origin node is '0'. Once a node with equal or higher depth is visited, the node is stored in an end of a breadth-first queue and is marked as "visited." While traversing, if any node is already marked as "visited," it's a back node.

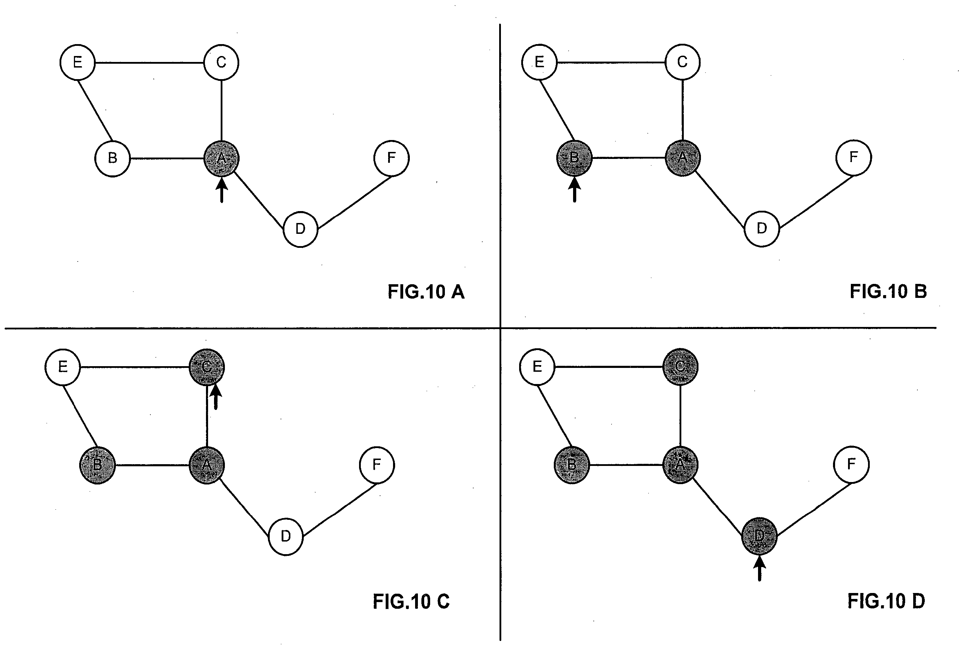

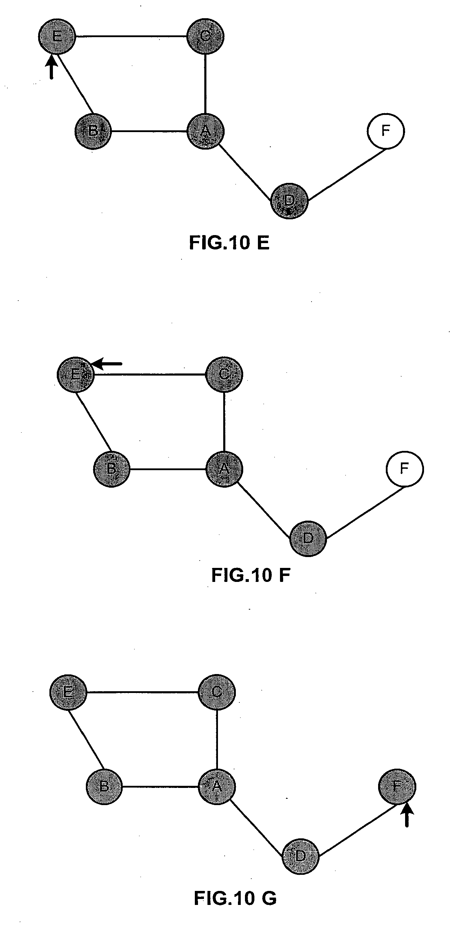

FIGs. 10A-10G shows a process of determining back nodes using the breadth first search algorithm. For example, starting from the origin node A (depth=0), the neighboring nodes B, C, and D having depth 1 (i.e., higher depth) are visited. As the nodes B, C, and D are visited for the first time, these nodes are stored in the breadth-first queue and marked
as "visited." Therefore, the nodes B, C, and D are now "visited" (shown as gray nodes in FIG. 10D). The back node detecting process traverses further, from first visited node B, and visits node E (neighboring node having depth 2 which is higher than the depth of node B). Again, the node E is stored in the breadth-first queue and marked as "visited" (shown as gray node in FIG. 10E). Now, the back node detecting algorithm traverse further from the second visited node C and visit node E (neighboring node having depth 2 which is higher than the depth of node C). However, as the node E is already marked "visited," it is determined as 'back node.' The back node detecting process traverses further from the third visited node D and visit node F (neighboring node having depth 2 which is higher than the depth of node D). As the node F is visited for the first time, node F is stored in the breadth-first queue and marked as "visited" (shown as gray node in FIG. 10G). As shown in FIGs. 10A-10G, the recently visited node is shown by an arrow mark and once the node is visited, it is highlighted with gray color.

Once the back node E is determined, a mark cycle algorithm (not shown) is executed to mark all edges which are part of the cycle. In an embodiment, the mark cycle algorithm is a repeated depth-first traversal of the graph, starting once from each back node. For each node, all edges which are not yet marked as "is part of cycle" are visited. Neighboring nodes with equal or lower depth are considered. Any edge leading to such a node is marked as "is part of cycle." Neighboring nodes with lower depth, except for the origin node, are added to the front of a depth-first queue. The mark cycle algorithm stops when the origin node is reached.

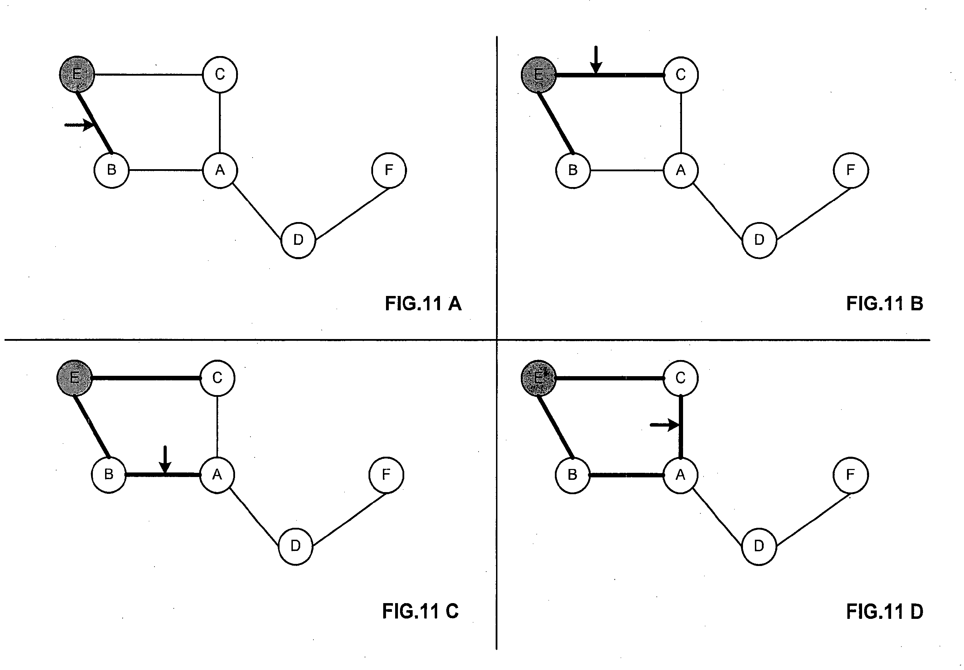

For example, referring to FIGs. 11A-11D, starting from the back node E (highlighted with gray color), the neighboring nodes B and C with lower depth are considered and the edges (E->B and E->C) are traversed and marked "is part of cycle." The recently visited edge is shown with an arrow and once the edge is visited, it is marked as "is part of cycle." Similarly, from node B the neighboring node A (lower depth) is considered and the edge B->A is traversed and marked "is part of cycle." From node C the neighboring node A (lower depth) is considered and the edge C->A is traversed and marked "is part of cycle." As there are no more back nodes, the cycle is considered as completely marked.

In an embodiment, the marked edges are highlighted (e.g., shown as bolded) to make them visually distinct. For the marked edges having 'is part of cycle' attribute, a line weight or color may be predefined for rendering. In an embodiment, the cycle highlighter 130 highlights the marked edges (shown as bolded edges in FIG. 11D) to make them visually distinct from other edges. Any suitable highlighting method may be applied to make these marked cycle edges visually distinct. Different cycles in the same network graph may be highlighted with different methods, e.g., using different colors. As the highlighted cycles indicate the occurrence of a potential fraud, therefore, the cycles can be further investigated or analyzed to determine if the investigated entity is involved in a fraudulent transaction.

In an embodiment, the graph generator 110, the cycle detector 120, and the cycle highlighter 130 are software instructions or code executed by a processor. In an embodiment, the graph generator 110, the cycle detector 120, and the cycle highlighter 130 are stored within a memory. In an embodiment, the graph generator 110, the cycle detector 120, and the cycle highlighter 130 are stored on a computer readable storage medium to perform the fraud detection using a network graph. The fraud management system 100 may include a media reader to read the instructions from the computer readable storage medium and store the instructions in storage or in random access memory (RAM). In an embodiment, the graph generator 110, the cycle detector 120, and the cycle highlighter 130 are stored within the processor.

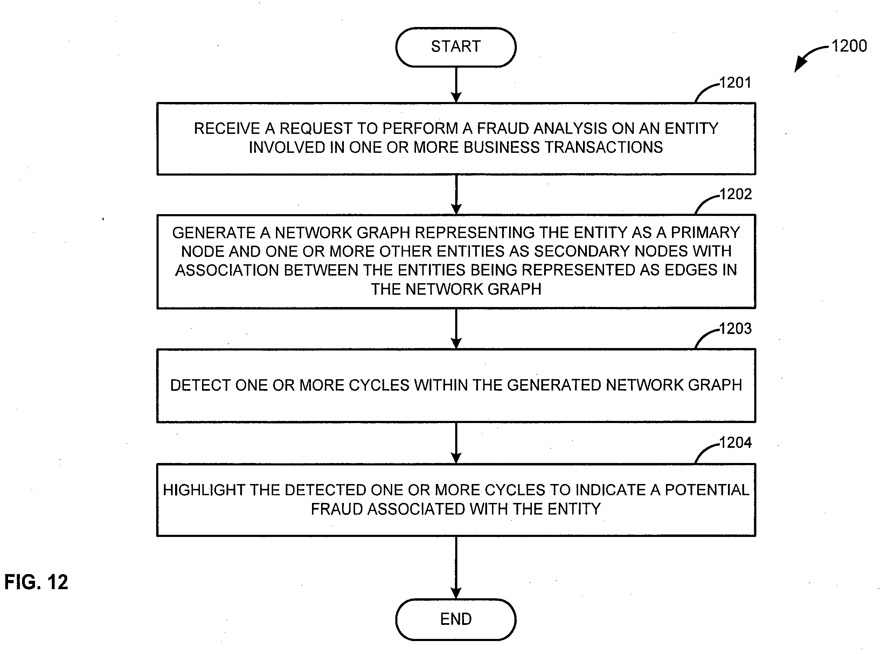

FIG. 12 is a flowchart illustrating process 1200 to detect potential fraud using network analysis. At 1201, a request is received to perform a fraud analysis on an entity involved in a business transaction. Based upon the request, a network graph (e.g., graph 900 of FIG. 9) is generated to represent the business transaction (e.g., transaction related to insurance claims), at 1202. In the network graph, the entity, e.g., claim 4711 (represented as node A in FIG. 9) is represented as a primary node (origin node). One or more other entities (represented as nodes B, C, D, E, and F) associated, directly or indirectly, with the entity in the business transaction are represented as secondary nodes (non-origin nodes). The relationships or associations between the entities (e.g., the relationships between the secondary nodes and between the secondary nodes and the primary node) are represented by edges in the network graph. Once the network graph is generated, one or more cycles are detected within the generated network graph, at 1203. The detected one or more cycles are highlighted to indicate a potential fraud associated with the entity, at 1204.

Some embodiments may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

In a specific configuration a computer program product may be tangibly embodied as a computer readable storage medium and/or embodied as a signal or data stream. The above-illustrated software components may be tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. A computer readable storage medium may be a non-transitory computer readable storage medium. Examples of a non-transitory computer readable storage media include, but are not limited to: magnetic media, such as hard disks, floppy disks, and magnetic tape; optical media such as CD-ROMs, DVDs and holographic indicator devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment may be implemented using Java, C++, or other object-oriented programming language and development tools. Another embodiment may be implemented in hard-wired circuitry in place of, or in combination with machine readable software instructions.

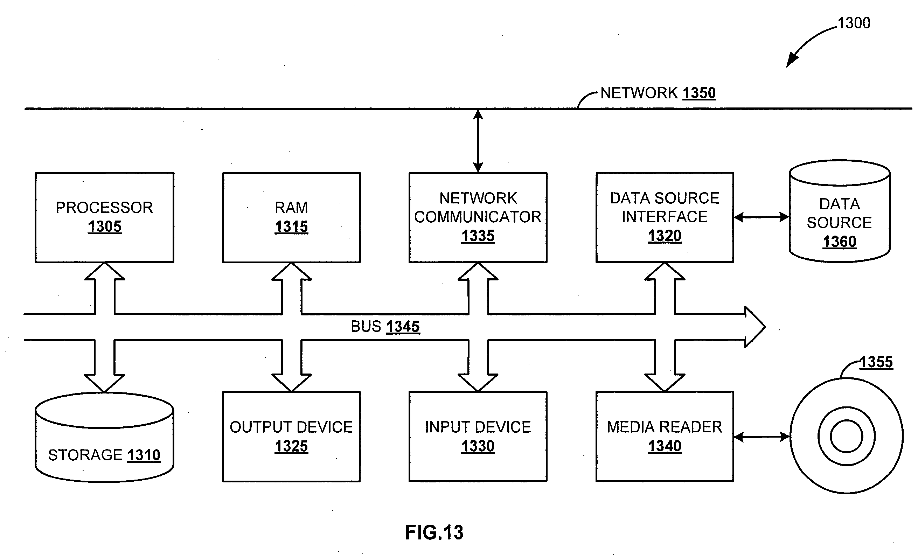

FIG. 13 is a block diagram of an exemplary computer system 1300. The computer system 1300 includes a processor 1305 that executes software instructions or code stored on a computer readable storage medium 1355 to perform the above-illustrated methods. The processor 1305 can include a plurality of cores. The computer system 1300 includes a media reader 1340 to read the instructions from the computer readable storage medium 1355 and store the instructions in storage 1310 or in random access memory (RAM) 1315. The storage 1310 provides a large space for keeping static data where at least some instructions could be stored for later execution. According to some embodiments, such as some in-memory computing system embodiments, the RAM 1315 can have sufficient storage capacity to store much of the data required for processing in the RAM 1315 instead of in the storage 1310. In some embodiments, all of the data required for processing may be stored in the RAM 1315. The stored instructions may be further compiled to generate other representations of the instructions and dynamically stored in the RAM 1315. The processor 1305 reads instructions from the RAM 1315 and performs actions as instructed. According to one embodiment, the computer system 1300 further includes an output device 1325 (e.g., a display) to provide at least some of the results of the execution as output including, but not limited to, visual information to users and an input device 1330 to provide a user or another device with means for entering data and/or otherwise interact with the computer system 1300. Each of these output devices 1325 and input devices 1330 could be joined by one or more additional peripherals to further expand the capabilities of the computer system 1300. A network communicator 1335 maybe provided to connect the computer system 1300 to a network 1350 and in turn to other devices connected to the network 1350 including other clients, servers, data stores, and interfaces, for instance. The modules of the computer system 1300 are interconnected via a bus 1345. Computer system 1300 includes a data source interface 1320 to access data source 1360. The data source 1360 can be accessed via one or more abstraction layers implemented in hardware or software. For example, the data source 1360 may be accessed by network 1350. In some embodiments the data source 1360 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open Database Connectivity (ODBC), produced by an underlying software system, e.g., an ERP system, and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments. One skilled in the relevant art will recognize, however that the one or more embodiments can be practiced without one or more of the specific details or with other methods, components, techniques, etc. In other instances, well-known operations or structures are not shown or described in details.

Although the processes illustrated and described herein include series of steps, it will be appreciated that the different embodiments are not limited by the illustrated ordering of steps, as some steps may occur in different orders, some concurrently with other steps apart from that shown and described herein. In addition, not all illustrated steps may be required to implement a methodology in accordance with the one or more embodiments. Moreover, it will be appreciated that the processes may be implemented in association with the apparatus and systems illustrated and described herein as well as in association with other systems not illustrated.

The above descriptions and illustrations of embodiments, including what is described in the Abstract, is not intended to be exhaustive or to limit the one or more embodiments to the precise forms disclosed. While specific embodiments of, and examples for, the embodiment are described herein for illustrative purposes, various equivalent modifications are possible within the scope of the embodiments, as those skilled in the relevant art will recognize. These modifications can be made to the embodiments in light of the above detailed description. Rather, the scope of the one or more embodiments is to be determined by the following claims.

## Claims

1. A computer-implemented method for fraud detection comprising:
receiving (1201) a request to perform a fraud analysis on an entity involved in a business transaction;
generating (1202) a network graph (220) to represent the business transaction, wherein the entity is represented as a primary node and one or more other entities associated with the entity in the business transaction are represented as secondary nodes in the network graph (220), and wherein relationships between the secondary nodes, and between the secondary nodes and the primary node are represented as edges in the network graph (220);
detecting (1203) one or more cycles within the generated network graph (220),
wherein a cycle is a path, formed by a sequence of edges, originating from the primary node and terminating at the primary node without traversing the secondary nodes in the path more than once; and
highlighting (1204) the detected one or more cycles to indicate a potential fraud associated with the entity;
wherein the one or more cycles are detected by determining one or more back nodes and wherein a back node is a node in a cycle with a maximum edge distance from the primary node; and
wherein the one or more back nodes are determined by a breadth first search algorithm, the breadth first search algorithm including steps of
- starting from the primary node, visiting nodes having depth one,
- storing the nodes having depth one into a breadth-first queue and marking the nodes having depth one as visited,
- traversing further, wherein, while traversing,
if a node is visited for the first time, storing the node visited for the first time into the breadth-first queue and marking the node visited for the first time as visited, and
if a node already marked as visited is visited again, determining the node visited again as a back node.

2. The method of claim 1, wherein the entity is one of a business document, a business partner, a location, and a point in time, and wherein a relationship is one of a role of the business partner, a family connection, and an ownership.

3. The method of claim 1 or 2, wherein receiving the request to perform the fraud analysis on the entity comprises receiving an identification of the entity selected from a list of potential entities for fraud.

4. The method of claim 3, wherein the list of potential entities for fraud is determined by:
detecting whether one or more predefined rules are violated by one or more entities; and
listing the one or more entities violating the one or more predefined rules as the potential entities for fraud.

5. The method of any one of the preceding claims, wherein generating (1201) the network graph (220) comprises:
accessing node type attributes to generate one or more nodes, wherein the node type attributes include information about:
one or more types of node to be generated for representing one or more types of entity in the network graph (220);
an identifier associated with a respective node type;
a view associated with the respective node type, wherein the view defines one or more nodes to be generated under the respective node type;
a database package to indicate a folder where the respective view is stored; and
a node type label for labeling the one or more nodes of the respective node type in the network graph (220);
accessing edge type attributes to generate one or more edges, wherein the edge type attributes include information about:
one or more types of edge to be generated for representing one or more types of relationships between the entities;
an identifier associated with respective edge type;
a view associated with respective edge type, wherein the view defines one or more edges to be generated under the respective edge type;
a database package to indicate a folder where the view of the respective edge type is stored; and
an edge type label for labeling the one or more edges of the respective edge type in the network graph (220);
and
based upon the accessed node type attributes and the accessed edge type attributes, generating the nodes and edges in the network graph (220).

6. The method of any one of the preceding claims, wherein the one or more back nodes are determined by performing a breadth first search traversal of the network graph (220) starting from the primary node, comprising:
accessing a neighboring node of the primary node which has an equal or a higher depth;
upon determining that the accessed node is not marked as visited, marking the accessed node as visited; and
upon determining the accessed node is marked as visited, identifying the accessed node as a back node.

7. The method of any one of the preceding claims, wherein the one or more cycles are highlighted by one of increasing a line weight of the cycle edges and changing a color of the cycle edges with a predefined color.

8. The method of any one of the preceding claims, wherein different cycles of the one or more cycles are highlighted with different colors.

9. A computer program product storing instructions, which when executed by a computer cause the computer to perform the method of any one of the claims 1 to 8.

10. A computer system (1300) for fraud detection using network analysis comprising:
at least one memory (1310, 1355) to store program code, which when executed by a computer cause the computer to perform the method of any one of the claims 1 to 8; and
at least one processor (1305) communicatively coupled to the at least one memory (1310, 1355), the at least one processor (1305) configured to execute the program code to perform the method of any one of the claims 1 to 8.

## Patentansprüche

1. Ein computerimplementiertes Verfahren zur Betrugserkennung, das Folgendes umfasst:
empfangen (1201) einer Anfrage zur Durchführung einer Betrugsanalyse an einer Entität, die an einem Geschäftsvorgang beteiligt ist;
erzeugen (1202) eines Netzwerkgraphs (220) zur Darstellung des Geschäftsvorgangs, wobei die Entität als ein primärer Knoten dargestellt wird und wobei eine oder mehrere andere Entitäten, die mit der Entität verknüpft sind, im Geschäftsvorgang als sekundäre Knoten im Netzwerkgraphen (220) dargestellt werden, und wobei Beziehungen unter den sekundären Knoten und zwischen den sekundären Knoten und dem primären Knoten als Kanten im Netzwerkgraphen (220) dargestellt werden;
detektieren (1203) von einem oder mehreren Zyklen innerhalb des erzeugten Netzwerkgraphen (220), wobei ein Zyklus ein Pfad ist, der aus einer Folge aus Kanten gebildet wird, die vom primären Knoten ausgehen und beim primären Knoten enden, ohne die sekundären Knoten im Pfad mehr als einmal zu durchlaufen; und
hervorheben (1204) des einen oder der mehreren detektierten Zyklen, um einen potenziellen Betrug anzuzeigen, der mit der Entität verknüpft ist;
wobei der eine oder die mehreren Zyklen durch die Bestimmung von einem oder mehreren *Back*-Knoten (*back nodes*) detektiert werden, und wobei ein *Back-*Knoten ein Knoten in einem Zyklus ist, der einen maximalen Kantenabstand vom primären Knoten aufweist; und
wobei der eine oder die mehreren *Back*-Knoten durch einen Breite-Zuerst-Suchalgorythmus bestimmt werden, wobei der Breite-Zuerst-Suchalgorythmus folgende Schritte umfasst:
- ausgehen vom primären Knoten, besuchen von Knoten mit Tiefe eins,
- speichern der Knoten mit Tiefe eins in eine Breite-Zuerst-Warteschlange und markieren der Knoten mit Tiefe eins als besucht,
- weiter durchlaufen, wobei während des Durchlaufens Folgendes bewerkstelligt wird,
falls ein Knoten zum ersten Mal besucht wird, speichern des zum ersten Mal besuchten Knotens in die Breite-Zuerst-Warteschlange und markieren des zum ersten Mal besuchten Knotens als besucht, und
falls ein bereits als besucht markierter Knoten nochmals besucht wird, festlegen des nochmals besuchten Knotens als *Back*-Knoten.

2. Das Verfahren nach Anspruch 1, wobei die Entität eines der Folgenden ist: ein Geschäftsdokument, ein Geschäftspartner, ein Ort, ein Zeitpunkt, und wobei eine Beziehung eines der Folgenden ist: eine Rolle des Geschäftspartners, eine familiäre Verbindung und ein Eigentumsrecht.

3. Das Verfahren nach Anspruch 1 oder 2, wobei das Empfangen der Anfrage zur Durchführung der Betrugsanalyse an der Entität das Empfangen einer Identifikation der Entität umfasst, die aus einer Liste potenziell für Betrug infrage kommender Entitäten ausgewählt wird.

4. Das Verfahren nach Anspruch 3, wobei die Liste potenziell für Betrug infrage kommender Entitäten bestimmt wird durch Folgendes:
feststellen, ob eine oder mehrere vorbestimmte Regeln von einer oder mehreren Entitäten verletzt werden; und
auflisten der einen oder der mehreren Entitäten, die die vorbestimmte oder die vorbestimmten Regeln verletzen als potenziell für Betrug infrage kommende Entitäten.

5. Das Verfahren nach irgendeinem der vorhergehenden Ansprüche, wobei das Erzeugen (1201) des Netzwerkgraphens (220) Folgendes umfasst:
zugreifen auf Knotentyp-Attribute, um einen oder mehrere Knoten zu erzeugen, wobei die Knotentyp-Attribute Informationen beinhalten über:
einen oder mehrere Knotentypen, die zu erzeugen sind, um einen oder mehrere Entitätstypen im Netzwerkgraphen (220) darzustellen;
einen Identifikator, der mit einem entsprechenden Knotentyp verknüpft ist;
eine Ansicht, die mit dem entsprechenden Knotentyp verknüpft ist, wobei die Ansicht einen oder mehrere Knoten definiert, die unter dem entsprechenden Knotentyp zu erzeugen sind;
ein Datenbank-Paket, um den Ordner anzugeben, wo die entsprechende Ansicht gespeichert ist; und
eine Knotentyp-Kennzeichnung, um den einen oder die mehreren Knoten des entsprechenden Knotentyps im Netzwerkgraphen (220) zu kennzeichnen;
zugreifen auf Kantentyp-Attribute, um eine oder mehrere Kanten zu erzeugen, wobei die Kantentyp-Attribute Informationen beinhalten über:
einen oder mehrere Kantentypen, die zu erzeugen sind, um einen oder mehrere Beziehungstypen zwischen den Entitäten darzustellen;
einen Identifikator, der mit einem entsprechenden Kantentyp verknüpft ist;
eine Ansicht, die mit dem entsprechenden Kantentyp verknüpft ist, wobei die Ansicht einen oder mehrere Kanten definiert, die unter dem entsprechenden Kantentyp zu erzeugen sind;
ein Datenbank-Paket, um den Ordner anzugeben, wo die Ansicht des entsprechenden Kantentyps gespeichert ist; und
eine Kantentyp-Kennzeichnung, um den einen oder die mehreren Kanten des entsprechenden Kantentyps im Netzwerkgraphen (220) zu kennzeichnen; und
basierend auf den Knotentyp-Attributen, auf die zugegriffen wird, und auf den Kantentyp-Attributen, auf die zugegriffen wird,
erzeugen der Knoten und Kanten im Netzwerkgraphen (220).

6. Das Verfahren nach irgendeinem der vorhergehenden Ansprüche, wobei der eine oder die mehreren Back-Knoten bestimmt werden, indem ein Breite-Zuerst-Suchdurchlauf des Netzwerkgraphen (220) durchgeführt wird, wobei beim primären Knoten begonnen wird, das Folgendes umfasst:
zugreifen auf einen benachbarten Knoten des primären Knotens, der eine gleiche oder größere Tiefe aufweist;
nachdem bestimmt worden ist, dass der Knoten, auf den zugegriffen wird, nicht als besucht markiert ist, markieren des Knotens, auf den zugegriffen wird, als besucht; und
nachdem bestimmt worden ist, dass der Knoten, auf den zugegriffen wird, als besucht markiert ist, identifizieren des Knotens, auf den zugegriffen wird, als *Back-*Knoten.

7. Das Verfahren nach irgendeinem der vorhergehenden Ansprüche, wobei der eine oder die mehreren Zyklen durch einen der Folgenden hervorgehoben werden: erhöhen der Liniengewichtung der Zykluskanten und ändern der Farbe der Zykluskanten in eine vorbestimmte Farbe.

8. Das Verfahren nach irgendeinem der vorhergehenden Ansprüche, wobei unterschiedliche Zyklen des einen oder der mehreren Zyklen mit unterschiedlichen Farben hervorgehoben werden.

9. Ein Computerprogrammprodukt, das Anweisungen speichert, die, wenn sie von einem Computer ausgeführt werden, den Computer dazu bringen, das Verfahren nach irgendeinem der Ansprüche 1 bis 8 durchzuführen.

10. Ein Computersystem (1300) zur Betrugserkennung durch Netzwerkanalyse, das Folgendes umfasst:
mindestens einen Speicher (1310, 1355), um Programmcode zu speichern, der, wenn er von einem Computer ausgeführt wird, den Computer dazu bringt, das Verfahren nach irgendeinem der Ansprüche 1 bis 8 durchzuführen; und
mindestens einen Prozessor (1305), der kommunikativ mit dem mindestens einen Speicher (1310, 1355) gekoppelt ist, wobei der mindestens eine Prozessor (1305) dazu konfiguriert ist, den Programmcode auszuführen, um das Verfahren nach irgendeinem der Ansprüche 1 bis 8 durchzuführen.

## Revendications

1. Un procédé de détection de fraude mis en oeuvre par ordinateur, comprenant le fait de :
recevoir (1201) une demande d'exécution d'une analyse de fraude sur une entité impliquée dans une transaction commerciale ;
générer (1202) un graphe de réseau (220) afin de représenter la transaction commerciale, sachant que l'entité est représentée comme noeud primaire et que une ou plusieurs entités associées à l'entité dans la transaction commerciale sont représentées comme noeuds secondaires dans le graphe de réseau (220), et sachant que des relations entre les noeuds secondaires et entre les noeuds secondaires et le noeud primaire sont représentées comme bords dans le graphe de réseau (220) ;
détecter (1203) un ou plusieurs cycles à l'intérieur du graphe de réseau (220) généré, sachant qu'un cycle est un parcours, constitué d'une séquence de bords, issu du noeud primaire et se terminant au niveau du noeud primaire sans traverser les noeuds secondaires dans le parcours plus d'une fois ; et
mettre en évidence (1204) le ou les cycles détectés pour indiquer une fraude potentielle associée à l'entité ;
sachant que le ou les cycles sont détectés en déterminant un ou plusieurs noeuds arrières (*back nodes*), et sachant qu'un noeud arrière est un noeud dans un cycle avec une distance de bord maximale à partir du noeud primaire ; et
sachant que le ou les noeuds arrières sont déterminés par un algorithme de recherche en largeur d'abord, l'algorithme de recherche en largeur d'abord incluant les étapes consistant à
- partir du noeud primaire, visiter des noeuds présentant une profondeur de un,
- stocker les noeuds de profondeur un dans une file d'attente en largeur d'abord (*breadth-first queue*), et marquer les noeuds de profondeur un en tant que visités,
- traverser davantage, sachant que tout en traversant,
si un noeud est visité pour la première fois, stocker le noeud visité pour la première fois dans la file d'attente en largeur d'abord et marquer le noeud visité pour la première fois en tant que visité, et
si un noeud marqué en tant que visité est visité une nouvelle fois, déterminer le noeud visité une nouvelle fois comme un noeud arrière.

2. Le procédé d'après la revendication 1, sachant que l'entité est un des suivants : un document commercial, un partenaire d'affaires, un lieu, un point temporel, et sachant qu'une relation est un des suivants : un rôle d'un partenaire d'affaires, un lien familial, et une appartenance.

3. Le procédé d'après la revendication 1 ou 2, sachant que le fait de recevoir la demande d'exécution de l'analyse de fraude sur l'entité comprend le fait de recevoir une identification de l'entité sélectionnée à partir d'une liste d'entités pouvant entrer en ligne de compte pour une fraude.

4. Le procédé d'après la revendication 3, sachant que la liste d'entités pouvant entrer en ligne de compte pour une fraude est déterminée par le fait de :
détecter, si une ou plusieurs règles prédéfinies ont été violées par une ou plusieurs entités ; et
énumérer la ou les entités violant la ou les règles prédéfinies comme pouvant entrer en ligne de compte pour une fraude.

5. Le procédé d'après une quelconque des revendications précédentes, sachant que le fait de générer (1201) le graphe de réseau (220) comprend le fait de :
accéder à des attributs de type de noeud afin de générer un ou plusieurs noeuds, sachant que les attributs de type de noeud incluent des informations sur :
un ou plusieurs types de noeud qui sont à générer pour représenter une ou plusieurs entités dans le graphe de réseau (220) ;
un identificateur associé à un type de noeud respectif ;
une vue associée au type de noeud respectif, sachant que la vue définit un ou plusieurs noeuds qui sont à générer sous le type de noeud respectif ;
un paquet de base de données pour indiquer un dossier, où la vue respective est stockée ; et
une étiquette de type de noeud pour étiqueter le ou les noeud du type de noeud respectif dans le graphe de réseau (220) ;
accéder à des attributs de type de bord afin de générer un ou plusieurs bords, sachant que les attributs de type de bord incluent des informations sur :
un ou plusieurs types de bord qui sont à générer pour représenter un ou plusieurs types de relations entre les entités ;
un identificateur associé à un type de bord respectif ;
une vue associée au type de bord respectif, sachant que la vue définit un ou plusieurs bords qui sont à générer sous le type de bord respectif ;
un paquet de base de données pour indiquer un dossier, où est stockée la vue du type de bord respectif; et
une étiquette de type de bord pour étiqueter le ou les bords du type de bord respectif dans le graphe de réseau (220) ; et
en se basant sur les attributs de type de noeud auxquels on accède et sur les attributs de type de bord auxquels on accède,
générer les noeuds et les bords dans le graphe de réseau (220).

6. Le procédé d'après une des revendications précédentes, sachant que le ou les noeuds arrières sont déterminés en effectuant une traversée de recherche en largeur d'abord du graphe de réseau (220) en partant du noeud primaire, comprenant le fait de :
accéder à un noeud voisin du noeud primaire qui présente une profondeur égale ou plus importante ;
lorsqu'il a été déterminé que le noeud auquel on a accédé n'est pas marqué en tant que visité, marquer le noeud auquel on a accédé en tant que visité ; et
lorsqu'il a été déterminé que le noeud auquel on a accédé est marqué en tant que visité, identifier le noeud auquel on a accédé en tant que noeud arrière.

7. Le procédé d'après une des revendications précédentes, sachant que le ou les cycles sont mis en évidence par un des suivants : augmenter la pondération ou encore l'épaisseur de la ligne (*line weight*) des bords de cycle et changer une couleur des bords de cycle avec une couleur prédéfinie.

8. Le procédé d'après une des revendications précédentes, sachant que différents cycles parmi le ou les cycles sont mis en évidence par différentes couleurs.

9. Un produit programme informatique stockant des instructions, lesquelles, quand elles sont exécutées par un ordinateur, amènent l'ordinateur à effectuer le procédé d'après une des revendications de 1 à 8.

10. Un système informatique (1300) de détection de fraude en utilisant une analyse de réseau, comprenant :
au moins une mémoire (1310, 1355) pour stocker un code de programme, lequel, quand il est exécuté par un ordinateur, amène l'ordinateur à effectuer le procédé d'après une des revendications de 1 à 8 ; et
au moins un processeur (1305) couplé de manière communicative avec au moins une mémoire (1310, 1355), le ou les processeurs (1305) étant configurés pour exécuter le code de programme afin d'effectuer le procédé d'après une des revendications de 1 à 8.
